# EUROPÄISCHE PATENTSCHRIFT

(11) **EP 3 591 731 B1**
(45) Veröffentlichungstag und Bekanntmachung des Hinweises auf die Patenterteilung: **29.05.2024**
(21) Anmeldenummer: 19178659.9
(22) Anmeldetag: 06.06.2019
(51) Int. Cl.: F16K 17/04

(54) **DURCHFÜHRUNGSELEMENT SOWIE SYSTEM AUS EINER TRENNSCHICHT UND EINEM DURCHFÜHRUNGSELEMENT**
FEED-THROUGH ELEMENT AND SYSTEM COMPRISING A SEPARATING LAYER AND A FEED-THROUGH ELEMENT
ÉLÉMENT DE TRAVERSÉE AINSI QUE SYSTÈME COMPOSÉ D'UNE COUCHE DE SÉPARATION ET D'UN ÉLÉMENT DE TRAVERSÉE

(30) Priorität: 02.07.2018 DE 102018210841
(43) Veröffentlichungstag der Anmeldung: 08.01.2020
(73) Patentinhaber: Volkswagen AG, 38440 Wolfsburg (DE)
(72) Erfinder: Lemke, Andreas, 39365 Ummendorf (DE); Wesche, Frank, 38458 Velpke (DE)

(56) Entgegenhaltungen:
- DE-A1- 3 214 487
- DE-A1-102015 103 053
- GB-A- 1 076 936
- US-A1- 2003 118 892

## Beschreibung

Die vorliegende Erfindung betrifft ein Durchführungselement zum Bereitstellen einer elektrisch leitenden Verbindung durch eine Trennschicht, aufweisend einen Elementkörper zum formschlüssigen oder zumindest im Wesentlichen formschlüssigen Einsetzen in eine Durchführungsaufnahme der Trennschicht, der Elementkörper aufweisend einen durchgängig elektrisch leitenden Leitabschnitt zum Bereitstellen der elektrisch leitenden Verbindung und einen zumindest abschnittsweise den Leitabschnitt umfänglich umgebenden elektrisch isolierenden Isolationsabschnitt zum Isolieren des Leitabschnitts gegen eine Innenfläche der Durchführungsaufnahme. Ferner betrifft die vorliegende Erfindung ein System aus einer Trennschicht und einem Durchführungselement zum Bereitstellen einer elektrisch leitenden Verbindung durch die Trennschicht, die Trennschicht aufweisend eine Durchführungsaufnahme, in der das Durchführungselement formschlüssig oder zumindest im Wesentlichen formschlüssig eingesetzt ist.

In der modernen Technik ist es immer wieder notwendig, eine elektrisch leitende Verbindung durch eine Trennschicht, beispielsweise ein Gehäuse, bereitzustellen. Bekannte Möglichkeiten sind beispielsweise ein Stecker als Ende einer elektrischen Kabelanordnung, das in eine Buchse eingesteckt wird, die in der Trennschicht angeordnet ist, wobei durch die Buchse ein Bereitstellen einer elektrischen Durchführung durch die Trennschicht ermöglicht ist. Weitere Beispiele für Durchführungen stellen kombinierte Kabeldurchführungen oder PG-Verschraubungen dar. Den bekannten Durchführungselementen ist jedoch gemeinsam, dass sie oftmals einen komplizierten mechanischen Aufbau aus oftmals einer Vielzahl an Einzelbauteilen aufweisen und dadurch aufwendig gestaltet sind. So wird beispielsweise gemäß der DE 198 36 631 A1 eine Steckerverbindung zur Bereitstellung einer Durchführung durch eine Trennschicht offenbart, in der ein mehradriges Kabel in einen Stecker der Steckerverbindung verklemmt wird, wobei eine Kontaktierung der Adern des Kabels durch Schneidmesser sichergestellt wird. Die entsprechende Steckerbuchse ist in der Trennschicht angeordnet. Eine weitere Steckerverbindung ist aus der DE 101 45 324 A1 bekannt. In dieser Durchführung wird ein Kabel direkt in eine Buchse, die in der Trennschicht angeordnet ist, verklemmt. Um dieses Verklemmen sicher auszugestalten, sind insbesondere eine Klemmhülse, mehrere Klemmenflächen und ein verschiebbares, insbesondere entfernbares, Keilelement vorgeschlagen.

Die oben beschriebenen bekannten Durchführungselemente weisen somit jeweils eine Vielzahl von einzelnen Baukomponenten auf, durch deren Zusammenspiel die eigentliche Durchführung zur Bereitstellung einer elektrischen Leitung zwischen den Oberflächen der Trennschicht bereitgestellt werden kann. Durch den teilweise komplizierten Aufbau, der insbesondere viele Grenzflächen aufweist, ist ein elektrisches Isolieren oftmals ebenfalls aufwendig, wobei insbesondere auch eine zusätzliche Fluiddichtigkeit nicht automatisch gewährleistet oder zumindest erschwert sein kann.

In der US 2003/0118892 A1 ist eine elektrochemische Zelle, umfassend: einen Behälter mit einem unteren Ende und einem offenen oberen Ende; eine positive Elektrode, die in dem Behälter angeordnet ist; eine negative Elektrode, die in dem Behälter angeordnet ist; ein Dichtungselement, das in dem offenen oberen Ende des Behälters zum Verschließen des offenen oberen Endes des Behälters angeordnet ist, wobei das Dichtungselement eine Öffnung aufweist, die durch eine Wand definiert ist; und einen Stromkollektor mit einem Schaft, der sich durch die Öffnung in dem Dichtungselement erstreckt, offenbart.

Es ist somit Aufgabe der Erfindung, die voranstehend beschriebenen Nachteile bei Durchführungselementen sowie Systemen mit derartigen Durchführungselementen zumindest teilweise zu beheben. Insbesondere ist es Aufgabe der Erfindung, ein Durchführungselement sowie ein System aus einer Trennschicht und einem Durchführungselement bereitzustellen, die in einfacher und kostengünstiger Art und Weise eine mechanisch besonders einfache elektrische Durchführung durch die Trennschicht bereitstellen, wobei insbesondere eine elektrische Isolation und bevorzugt zusätzlich eine fluiddichte Abdichtung der Trennschicht ermöglicht wird.

Die voranstehende Aufgabe wird durch die Patentansprüche gelöst. Insbesondere wird die Aufgabe durch ein Durchführungselement gemäß dem unabhängigen Anspruch 1 sowie durch ein System aus einer Trennschicht und einem Durchführungselement gemäß dem nebengeordneten Anspruch 7 gelöst. Weitere Vorteile der Erfindung ergeben sich aus den Unteransprüchen, der Beschreibung und den Zeichnungen. Dabei gelten Merkmale, die im Zusammenhang mit dem erfindungsgemäßen Durchführungselement beschrieben sind, selbstverständlich auch im Zusammenhang mit einem erfindungsgemäßen System und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch ein Durchführungselement zum Bereitstellen einer elektrisch leitenden Verbindung durch eine Trennschicht, wobei die Trennschicht ein Gehäuse einer Batterie eines Fahrzeuges ist, aufweisend einen Elementkörper zum formschlüssigen oder zumindest im Wesentlichen formschlüssigen Einsetzen in eine Durchführungsaufnahme der Trennschicht, der Elementkörper aufweisend einen durchgängig elektrisch leitenden Leitabschnitt zum Bereitstellen der elektrisch leitenden Verbindung und einen zumindest abschnittsweise den Leitabschnitt umfänglich umgebenden elektrisch isolierenden Isolationsabschnitt zum Isolieren des Leitabschnitts gegen eine Innenfläche der Durchführungsaufnahme. Ein erfindungsgemäßes Durchführungselement ist dadurch gekennzeichnet, dass der Elementkörper eine erste Stirnfläche, eine der ersten Stirnfläche gegenüberliegende zweite Stirnfläche und eine die erste Stirnfläche und die zweite Stirnfläche verbindende Mantelfläche aufweist, wobei die erste Stirnfläche eine größere Querschnittsfläche als die zweite Stirnfläche aufweist und wobei die Mantelfläche umlaufend zumindest abschnittsweise durch den Isolationsabschnitt gebildet ist.

Das erfindungsgemäße Durchführungselement ist weiter dadurch ausgebildet, dass das Durchführungselement zum Fixieren des Elementkörpers in der Durchführungsaufnahme eine Fixiervorrichtung zum Ausüben einer Fixierkraft mit einer Fixierrichtung auf den Elementkörper aufweist, wobei die Fixierrichtung der Fixierkraft zumindest im Wesentlichen von der ersten Stirnfläche zur zweiten Stirnfläche zeigt. Durch eine derartige Fixiervorrichtung kann ein sicheres und insbesondere befestigtes Anordnen des Durchführungselements, insbesondere des Elementkörpers des Durchführungselements, in der Durchführungsaufnahme sichergestellt werden. Die Fixiervorrichtung übt auf den Elementkörper des Durchführungselements eine Fixierkraft aus. Durch die Fixierrichtung der Fixierkraft zumindest im Wesentlichen von der ersten Stirnfläche zur zweiten Stirnfläche wird insbesondere der Elementkörper somit mit seiner kleineren zweiten Stirnfläche in die Durchführungsaufnahme hineingedrückt. Durch den Formschluss zwischen dem Elementkörper und der Durchführungsaufnahme und die gleichzeitig wirkende Fixierkraft kann somit ein Anordnen und insbesondere ein Verbleiben des Durchführungselements in der Durchführungsaufnahme sichergestellt werden.

Bei dem erfindungsgemäßen Durchführungselement ist ferner vorgesehen, dass die Fixiervorrichtung ein erstes Federelement zum Ausüben einer drückenden Fixierkraft auf die erste Stirnfläche aufweist, wobei das erste Federelement zumindest einen ersten Abstützabschnitt zum Abstützen an einem ersten Gegenabstützungsabschnitt auf einer ersten Oberfläche der Trennschicht und einen ersten Einleiteabschnitt zum Einleiten der Fixierkraft in einen ersten Gegeneinleiteabschnitt an der ersten Stirnfläche aufweist. In dieser ersten Ausgestaltungsform ist die Fixiervorrichtung auf derjenigen Seite des Durchführungselements angeordnet, auf der sich die erste Stirnfläche des Elementkörpers befindet. Zur Erzeugung der Fixierkraft weist die Fixiervorrichtung insbesondere ein erstes Federelement auf. Dieses Federelement kann sich über einen ersten Abstützabschnitt an einer ersten Oberfläche, insbesondere an einem ersten Gegenabstützungsabschnitt, der Trennschicht abstützen und über einen ersten Einleiteabschnitt die Fixierkraft in einem ersten Gegeneinleiteabschnitt an der ersten Stirnfläche des Elementkörpers einleiten. Mit anderen Worten wird das erste Federelement zwischen dem Gegenabstützungsabschnitt auf der ersten Oberfläche der Trennschicht und dem ersten Gegeneinleiteabschnitt an der ersten Stirnfläche des Elementkörpers verspannt, wodurch die drückende Fixierkraft auf die erste Stirnfläche in Richtung der zweiten Stirnfläche erzeugt wird.

Ein erfindungsgemäßes Durchführungselement ist für eine Bereitstellung einer elektrisch leitenden Verbindung durch eine Trennschicht vorgesehen. In der Trennschicht befindet sich insbesondere bevorzugt eine Durchführungsaufnahme, in die das Durchführungselement formschlüssig oder zumindest im Wesentlichen formschlüssig eingesetzt werden kann. Die elektrische Leitfähigkeit des erfindungsgemäßen Durchführungselements wird durch einen durchgängig elektrisch leitenden Leitabschnitt sichergestellt. Durchgängig elektrisch leitend bedeutet im Sinne der Erfindung insbesondere, dass der Leitabschnitt bei einem in eine Durchführungsaufnahme eingesetzten Durchführungselement sich vollständig durch die Trennschicht erstreckt und bevorzugt auf beiden Seiten der Trennschicht elektrisch leitend kontaktiert werden kann. Auf diese Weise kann somit durch den Leitabschnitt eine elektrisch leitende Verbindung zwischen den beiden Seiten der Trennschicht hergestellt werden. Zumindest in dem Abschnitt des Elementkörpers des Durchführungselements, das im eingesetzten Zustand des Durchführungselements in der Durchführungsaufnahme mit einer Innenfläche der Durchführungsaufnahme in Kontakt steht, weist der Elementkörper des Durchführungselements ferner zusätzlich einen elektrisch isolierenden Isolationsabschnitt auf. Dadurch kann eine Isolierung des Leitabschnitts gegen diese Innenfläche der Durchführungsaufnahme und damit gegen die gesamte Trennschicht sichergestellt werden. Auf diese Weise kann insbesondere bereitgestellt werden, dass ein erfindungsgemäßes Durchführungselement unabhängig von einer Materialwahl der Trennschicht eingesetzt werden kann. Mit anderen Worten kann die Trennschicht, in der ein erfindungsgemäßes Durchführungselement eingesetzt wird, sowohl elektrisch isolierend als auch elektrisch leitend ausgebildet sein, wobei unabhängig von dieser Ausgestaltung durch das erfindungsgemäße Durchführungselement lediglich eine elektrisch verbindende Leitung bereitgestellt werden kann, ohne dass ein Überspringen der durch das Durchführungselement fließenden elektrischen Energie auf die Trennschicht oder umgekehrt befürchtet werden muss.

Erfindungsgemäß weist der Elementkörper eines Durchführungselements eine spezielle Form auf, insbesondere zwei Stirnflächen, die durch eine Mantelfläche verbunden sind. Erfindungsgemäß weist insbesondere die erste Stirnfläche eine größere Querschnittsfläche als die zweite Stirnfläche auf. Mit anderen Worten ist der Elementkörper somit bevorzugt als ein Pyramidenstumpf ausgebildet, wobei die Form der beiden Stirnflächen sowohl gleich als auch unterschiedlich sein kann. Bevorzugt können die beiden Stirnflächen ferner zentriert zueinander angeordnet sein. Um das formschlüssige oder zumindest im Wesentlichen formschlüssige Einsetzen des Durchführungselements in die Durchführungsaufnahme sicherstellen zu können, kann bevorzugt vorgesehen sein, dass auch die Durchführungsaufnahme eine dem Elementkörper angepasste Form aufweist. Mit anderen Worten kann auch die Durchführungsaufnahme bevorzugt eine Form aufweisen, dass auf einer ersten Oberfläche der Trennschicht die Durchführungsaufnahme eine größere erste Aufnahmeöffnung aufweist als eine zweite Aufnahmeöffnung auf einer der ersten Oberfläche gegenüberliegenden zweiten Oberfläche. Durch die erfindungsgemäße Form des Elementkörpers kann somit insbesondere sichergestellt werden, dass durch den Formschluss des Durchführungselements in der Durchführungsaufnahme das Durchführungselement mit seiner Mantelfläche, insbesondere durch den Isolationsabschnitt, bevorzugt umfänglich oder zumindest im Wesentlichen umfänglich sowie durchgängig oder zumindest im Wesentlichen an der Innenfläche der Durchführungsaufnahme anliegt. Ein besonders sicheres Anordnen des Durchführungselements in der Durchführungsaufnahme kann auf diese Weise bereitgestellt werden. Ferner weist das erfindungsgemäße Durchführungselement bzw. dessen Elementkörper im Wesentlichen lediglich nur den Leitabschnitt und den Isolationsabschnitt auf, wodurch ein erfindungsgemäßes Durchführungselement mechanisch besonders einfach ausgebildet sein kann. Bevorzugte Einsatzgebiete eines erfindungsgemäßen Durchführungselements können beispielsweise im Automobilbau sein, insbesondere zum Beispiel kann die Trennschicht, in der ein erfindungsgemäßes Durchführungselement angeordnet ist, ein Gehäuse einer Batterie eines Fahrzeugs sein.

Bevorzugt kann beim erfindungsgemäßen Durchführungselement vorgesehen sein, dass der Elementkörper, insbesondere der Leitabschnitt, kegelstumpfförmig oder zumindest im Wesentlichen kegelstumpfförmig ausgebildet ist. Ein Kegelstumpf stellt eine besonders einfache Form dar, bei der eine erste Stirnfläche eine größere Querschnittsfläche als eine zweite, der ersten Stirnfläche gegenüberliegende, zweite Stirnfläche aufweist. Insbesondere ist ein Kegelstumpf auch rotationssymmetrisch, wodurch eine Herstellung und insbesondere eine Anordnung eines erfindungsgemäßen Durchführungselements in der Durchführungsaufnahme erleichtert werden können. Auch ein Einbringen der Durchführungsaufnahme in die Trennschicht, wobei die Durchführungsaufnahme ebenfalls in dieser bevorzugten Ausgestaltungsform kegelstumpfförmig oder zumindest im Wesentlichen kegelstumpfförmig ausgebildet sein kann, kann besonders einfach und unkompliziert vorgenommen werden.

Auch kann ein erfindungsgemäßes Durchführungselement dadurch gekennzeichnet sein, dass der Isolationsabschnitt zum Bereitstellen einer fluiddichten Abdichtung der Durchführungsaufnahme zumindest eine Dichtfläche zum formschlüssigen Anlegen an zumindest eine Gegendichtfläche der Innenfläche der Durchführungsaufnahme aufweist. Zusätzlich zur elektrischen Isolation durch den Isolationsabschnitt kann in dieser bevorzugten Ausgestaltungsform eines erfindungsgemäßen Durchführungselements durch dieses auch eine Trennung von Fluidräumen, die durch die Trennschicht voneinander getrennt sind, bereitgestellt werden. Die Dichtfläche ist am Isolationsabschnitt bevorzugt umlaufend um den gesamten Elementkörper angeordnet, sodass die durch die Dichtfläche, die im eingesetzten Zustand formschlüssig an einer Gegendichtfläche der Innenfläche der Durchführungsaufnahme anliegt, besonders sicher und ebenfalls umlaufend abgedichtet werden kann. Auch bei dieser Abdichtung ist die erfindungsgemäße, bevorzugt pyramidenstupfartige, besonders bevorzugt kegelstumpfartige, Form des Elementkörpers des Durchführungselements vorteilhaft, da durch diese das formschlüssige Anliegen des gesamten Elementkörpers in der Durchführungsaufnahme zur Bereitstellung der Abdichtung weiter verbessert werden kann.

Gemäß einer alternativen oder zusätzlichen Weiterentwicklung eines erfindungsgemäßen Durchführungselements kann ferner vorgesehen sein, dass die Fixiervorrichtung ein zweites Federelement zum Ausüben einer ziehenden Fixierkraft auf die zweite Stirnfläche aufweist, wobei das zweite Federelement zumindest einen zweiten Abstützabschnitt zum Abstützen an einem zweiten Gegenabstützungsabschnitt auf einer zweiten Oberfläche der Trennschicht und einen zweiten Einleiteabschnitt zum Einleiten der Fixierkraft in einen zweiten Gegeneinleiteabschnitt an der zweiten Stirnfläche aufweist. In dieser zweiten, alternativen oder zusätzlichen, Ausgestaltungsform weist die Fixiervorrichtung insbesondere ein zweites Federelement auf, wobei hier die Fixierkraft als ziehende Fixierkraft auf die zweite Stirnfläche des Elementkörpers wirkt. Auch hier stützt sich das zweite Federelement, insbesondere ein zweiter Abstützabschnitt des zweiten Federelements, an einem zweiten Gegenabstützungsabschnitt auf einer zweiten Oberfläche der Trennschicht ab und leitet die ziehende Fixierkraft über einen zweiten Einleiteabschnitt in einen zweiten Gegeneinleiteabschnitt an der zweiten Stirnfläche ein. Mit anderen Worten wird in dieser Ausgestaltungsform das zweite Federelement zwischen der zweiten Oberfläche, insbesondere dem zweiten Gegenabstützungsabschnitt auf der zweiten Oberfläche, und dem zweiten Gegeneinleiteabschnitt an der zweiten Stirnfläche des Elementkörpers verspannt, wodurch eine Fixierkraft als ziehende Fixierkraft auf die zweite Stirnfläche ausgeübt wird. Somit wird in dieser Ausgestaltungsform der Elementkörper und damit das gesamte Durchführungselement in die Durchführungsaufnahme hineingezogen.

Bevorzugt kann ein erfindungsgemäßes Durchführungselement dahin gehend weiterentwickelt sein, dass die Fixierkraft einen insbesondere einstellbaren Öffnungsgrenzwert aufweist, zum Beenden des Fixierens des Elementkörpers in der Durchführungsaufnahme bei einer auf den Elementkörper entgegen der Fixierrichtung wirkenden Öffnungskraft größer als der Öffnungsgrenzwert. Durch die Fixiervorrichtung wird eine Fixierkraft auf den Elementkörper ausgeübt, wobei die Fixierrichtung dieser Fixierkraft derart ausgebildet ist, dass das Durchführungselement in Richtung seiner zweiten, kleineren Stirnfläche in die Durchführungsaufnahme gedrückt und/oder gezogen wird. In dieser Ausgestaltungsform weist nun diese Fixierkraft einen, insbesondere einstellbaren, Öffnungsgrenzwert auf. Mit anderen Worten kann in dieser Ausgestaltungsform eine Öffnungskraft, die entgegen der Fixierrichtung wirkt, den Elementkörper und damit das Durchführungselement zumindest teilweise aus der Durchführungsaufnahme herausdrücken, sobald die Öffnungskraft größer ist als dieser Öffnungsgrenzwert. Mit anderen Worten wird das formschlüssige Anliegen des Durchführungselements in der Durchführungsaufnahme bei einer Öffnungskraft größer als der Öffnungsgrenzwert beendet. Ein bevorzugt vorgesehenes Einstellen des Öffnungsgrenzwerts ermöglicht insbesondere, die Größe der jeweils nötigen Öffnungskraft einzustellen. Insbesondere bei einer fluiddichten Anordnung des Durchführungselements in der Durchführungsaufnahme wird somit die Abdichtung aufgehoben und Fluid kann durch die Durchführungsaufnahme ausströmen. Ein Einsatz bzw. eine Verwendung eines erfindungsgemäßen Durchführungselements als Überdruckventil kann auf diese Weise ermöglicht werden.

Auch kann bei einem erfindungsgemäßen Durchführungselement ferner vorgesehen sein, dass das Durchführungselement zum formschlüssigen Halten des Elementkörpers in der Durchführungsaufnahme ein Halteelement aufweist, wobei das Halteelemente zumindest einen Elementhalteabschnitt zum formschlüssigen Kontaktieren eines Elementgegenhalteabschnitts des Elementkörpers und einen Trennschichthalteabschnitt zum formschlüssigen Kontaktieren eines Trennschichtgegenhalteabschnitts der Trennschicht aufweist. In dieser weiteren zusätzlichen oder alternativen Ausgestaltungsform kann durch das Halteelement ein sicheres Anordnen und Verbleiben des Durchführungselements in der Durchführungsaufnahme sichergestellt werden. Insbesondere durch die Formschlüsse zwischen dem Halteelement und jeweils dem Elementkörper bzw. der Trennschicht, im Speziellen mit dem Elementgegenhalteabschnitt des Elementkörpers und dem Trennschichtgegenhalteabschnitt der Trennschicht, kann somit ein Herausfallen des Durchführungselements aus der Durchführungsaufnahme verhindert werden. Durch entsprechende Ausgestaltung des Halteelements, des Elementhalteabschnitts, des Trennschichthalteabschnitt sowie des Elementgegenhalteabschnitts und des Trennschichtgegenhalteabschnitts kann eine Anordnung des Halteelements auf beiden Seiten der Trennschicht ermöglicht werden.

Gemäß einem zweiten Aspekt der Erfindung wird die Aufgabe gelöst durch ein System aus einer Trennschicht und einem Durchführungselement zum Bereitstellen einer elektrisch leitenden Verbindung durch die Trennschicht, die Trennschicht aufweisend eine Durchführungsaufnahme, in der das Durchführungselement formschlüssig oder zumindest im Wesentlichen formschlüssig eingesetzt ist. Ein erfindungsgemäßes System ist dadurch gekennzeichnet, dass das Durchführungselement gemäß dem ersten Aspekt der Erfindung ausgebildet ist. Sämtliche Vorteile, die in Bezug auf ein Durchführungselement gemäß dem ersten Aspekt der Erfindung beschrieben worden sind, können somit auch durch ein erfindungsgemäßes System gemäß dem zweiten Aspekt der Erfindung bereitgestellt werden, das ein derartiges Durchführungselement gemäß dem ersten Aspekt der Erfindung aufweist.

Ferner kann ein erfindungsgemäßes System dadurch gekennzeichnet sein, dass die Trennschicht ein erstes Fluid mit einem ersten Fluiddruck und ein zweites Fluid mit einem zum ersten Fluiddruck unterschiedlichen zweiten Fluiddruck trennt, wobei der Unterschied des ersten Fluiddrucks zum zweiten Fluiddruck eine Fixierkraft mit einer Fixierrichtung auf das Durchführungselement zum Fixieren des Durchführungselements in der Durchführungsaufnahme erzeugt, wobei die Fixierrichtung der Fixierkraft zumindest im Wesentlichen von der ersten Stirnfläche des Durchführungselements zur zweiten Stirnfläche des Durchführungselements zeigt. In dieser Ausgestaltungsform des Systems kann somit die Fixierkraft durch die beiden Fluide, insbesondere dem Druckunterschied der Fluiddrücke der beiden Fluide, bereitgestellt werden, die durch die Trennschicht voneinander getrennt werden. Wie oben bereits in Bezug auf die Fixiervorrichtung eines erfindungsgemäßen Durchführungselements beschrieben, kann durch eine Fixierkraft mit einer Fixierrichtung zumindest im Wesentlichen von der ersten Stirnfläche zur zweiten Stirnfläche des Durchführungselements ein sicheres Anordnen und Halten des Durchführungselements in der Durchführungsaufnahme sichergestellt werden. Eine Erzeugung dieser Fixierkraft durch unterschiedliche Fluiddrücke von zwei durch die Trennschicht getrennten Fluide kann insbesondere alternativ oder zusätzlich zu einer bereits vorhandenen Fixiervorrichtung oder einem Halteelement des Durchführungselements vorgesehen sein.

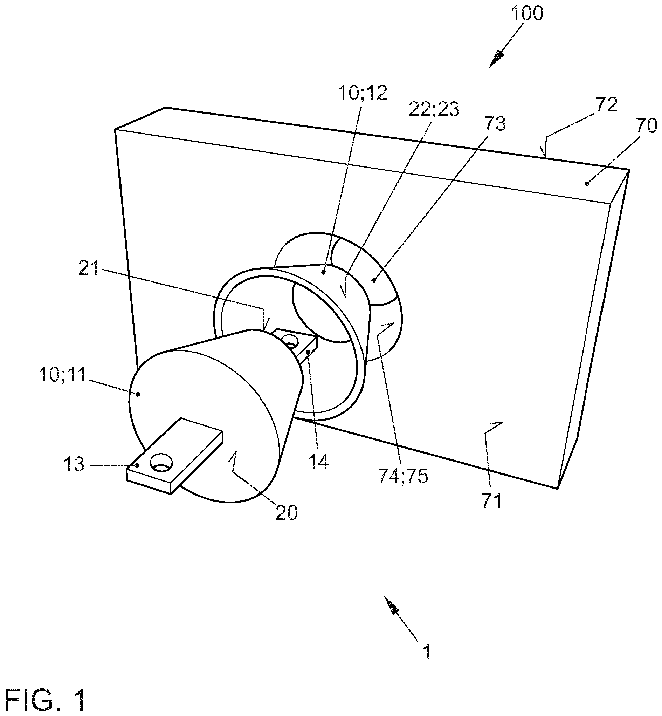

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehenden Merkmale, einschließlich konstruktiver Einzelheiten und räumlicher Anordnungen, können sowohl für sich als auch in den verschiedenen Kombinationen erfindungswesentlich sein. Elemente mit gleicher Funktion und/oder Wirkungsweise sind in den Figuren 1 bis 7 jeweils mit denselben Bezugszeichen versehen.

Es zeigen schematisch:
- Fig. 1: eine erste Ausgestaltungsform eines erfindungsgemäßen Systems,
- Fig. 2: eine zweite Ausgestaltungsform eines erfindungsgemäßen Systems,
- Fig. 3: eine dritte Ausgestaltungsform eines erfindungsgemäßen Systems,
- Fig. 4: Weiterentwicklungen eines erfindungsgemäßen Systems,
- Fig. 5: eine vierte Ausgestaltungsform eines erfindungsgemäßen Systems
- Fig. 6: eine erste Ansicht einer fünften Ausgestaltungsform eines erfindungsgemäßen Systems, und
- Fig. 7: eine zweite Ansicht der in Fig. 6 gezeigten fünften Ausgestaltungsform eines erfindungsgemäßen Systems.

Fig. 1 zeigt die wesentlichen Elemente eines erfindungsgemäßen Systems 100, insbesondere eine Trennschicht 70 sowie ein erfindungsgemäßes Durchführungselement 1. Das System 100 ist in einer Explosionsdarstellung gezeigt. In der Trennschicht 70, insbesondere durchgängig zwischen der ersten Oberfläche 71 und der zweiten Oberfläche 72 der Trennschicht 70, ist eine Durchführungsaufnahme 73 angeordnet. Die Durchführungsaufnahme 73 weist eine Innenfläche 74 auf, die in dieser Ausgestaltungsform gleichzeitig eine Gegendichtfläche 75 darstellt.

Das erfindungsgemäße Durchführungselement 1 wiederum weist im Wesentlichen als Bauelemente einen Elementkörper 10 auf, der sich in einen Leitabschnitt 11 und einem Isolationsabschnitt 12 teilt. Der durchgängig leitende Leitabschnitt 11 weist an seinen beiden Enden einen ersten Anschlussabschnitt 13 sowie einen zweiten Anschlussabschnitt 14 auf, wodurch eine elektrisch leitende Verbindung durch die Trennschicht 70 bereitgestellt werden kann. Die Anschlussabschnitte 13, 14 können dazu verwendet werden, beispielsweise Kabel am Leitabschnitt 11 eines erfindungsgemäßen Durchführungselements 1 zu befestigen. Erfindungsgemäß weist der Elementkörper 10, insbesondere der Leitabschnitt 11, eine Form derart auf, dass eine erste Stirnfläche 20 eine größere Querschnittsfläche aufweist, als eine zweite Stirnfläche 21. Durch einen wie dargestellt kegelstumpfförmigen Elementkörper 10, insbesondere zumindest im Wesentlichen gebildet durch den ebenfalls kegelstumpfförmigen Leitabschnitt 11, kann eine derartige Form besonders einfach bereitgestellt werden. Zwischen den beiden Stirnflächen 20, 21 weist der Elementkörper 10 eine Mantelfläche 22 auf, die in dieser Ausgestaltungsform im Wesentlichen durch den Isolationsabschnitt 12 gebildet ist. Der Isolationsabschnitt 12 wird in dieser Ausgestaltungsform ferner zur Bereitstellung einer Abdichtung eingesetzt, wofür der Isolationsabschnitt 12 und dadurch insbesondere die entsprechende Mantelfläche 22 gleichzeitig als Dichtfläche 23 ausgebildet sind. Dargestellt ist das erfindungsgemäße System 100 in einer Explosionsdarstellung, im zusammengesetzten Zustand liegt die Dichtfläche 23 formschlüssig an der Gegendichtfläche 75 der Innenfläche 74 der Durchführungsaufnahme 73 an, wodurch eine sichere Abdichtung der Durchführungsaufnahme 73 sichergestellt werden kann.

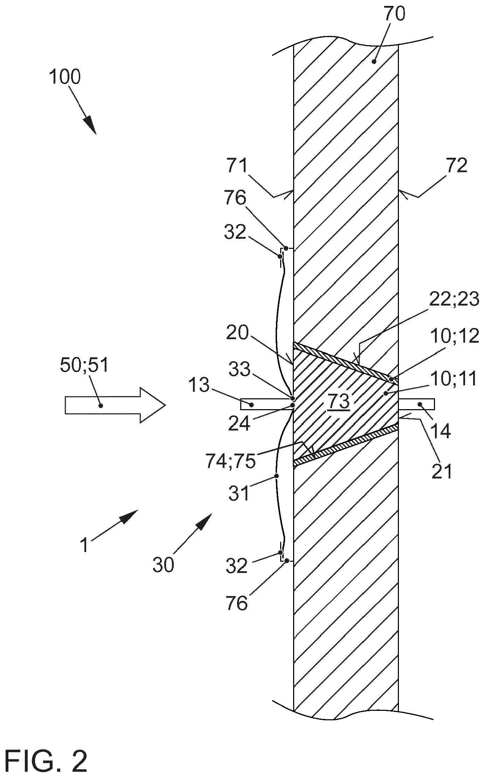

In Fig. 2 ist eine weitere mögliche Ausgestaltungsform eines erfindungsgemäßen Systems 100 und insbesondere eines erfindungsgemäßen Durchführungselements 1 gezeigt, wobei das Durchführungselement 1 in dieser Ausgestaltungsform zusätzlich eine Fixiervorrichtung 30 aufweist. Auch hier ist der Elementkörper 10, insbesondere der Leitabschnitt 1 und der Isolationsabschnitt 12 in der Durchführungsaufnahme 73 angeordnet. Durch das Isolationselement 12, das insbesondere die Mantelfläche 22 des Elementkörpers 10 bildet, kann wiederum über eine Dichtfläche 23 und deren formschlüssiges Anliegen einer Gegendichtfläche 75 der Innenfläche 74 eine Abdichtung der beiden Seiten der Trennschicht 70 sichergestellt werden. Wie gezeigt, kann ein erfindungsgemäßes Durchführungselement 1 eine Fixiervorrichtung 30 aufweisen, wobei diese Fixiervorrichtung 30 in der dargestellten Ausgestaltungsform ein erstes Federelement 31 aufweist. Dieses erste Federelement 31, insbesondere erste Abstützabschnitte 32 des ersten Federelements 31, stützen sich über erste Gegenabstützungsabschnitte 76 an einer ersten Oberfläche 71 der Trennschicht 70 ab und leiten eine Fixierkraft 50 über einen ersten Einleiteabschnitt 33 in einen ersten Gegeneinleiteabschnitt 24 in den Elementkörper 10 ein. Durch die gezeigte Anordnung des ersten Federelements 31 ergibt sich die Fixierkraft 50 als eine drückende Fixierkraft 50, wobei eine Fixierrichtung 51 insbesondere von der ersten Stirnfläche 20 zur zweiten Stirnfläche 21 zeigt. Auf diese Weise wird durch die Fixierkraft 50 somit der Elementkörper 10 des Durchführungselements 1 in die Durchführungsaufnahme 73 gedrückt, wodurch ein insbesondere formschlüssiges Anordnen und Halten des Durchführungselements 1 in der Durchführungsaufnahme 73 sichergestellt werden kann.

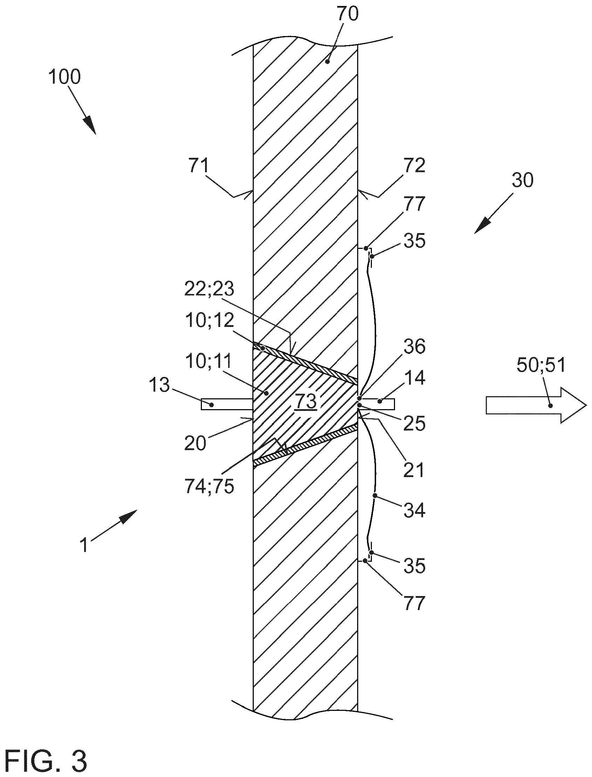

Fig. 3 zeigt eine zusätzliche Ausgestaltungsform eines erfindungsgemäßen Durchführungselements 1 eines erfindungsgemäßen Systems 100, wobei im Unterschied zu Fig. 2 nun die Fixiervorrichtung 30 ein zweites Federelement 34 aufweist, das auf einer zweiten Oberfläche 72 der Trennschicht 70 angeordnet ist (das erste Federelement 31 ist in Fig. 3 nicht gezeigt). Das zweite Federelement 34 stützt sich wiederum über zweite Abstützabschnitte 35 an zweiten Gegenabstützungsabschnitten 77 auf der zweiten Oberfläche 72 der Trennschicht 70 ab und leitet die Fixierkraft 50 über zweite Einleiteabschnitte 36 in einen zweiten Gegeneinleiteabschnitt 25 in die zweite Stirnfläche 21 des Elementkörpers 10 ein. Hier ergibt sich somit die Fixierkraft 50 als eine ziehende Fixierkraft 50, wobei wiederum die Fixierrichtung 50 von der ersten Stirnfläche 20 in Richtung der zweiten Stirnfläche 21 zeigt. In dieser Ausgestaltungsform wird somit der Elementkörper 10 des Durchführungselements 1 in die Durchführungsaufnahme 73 hineingesogen und sicher gehalten.

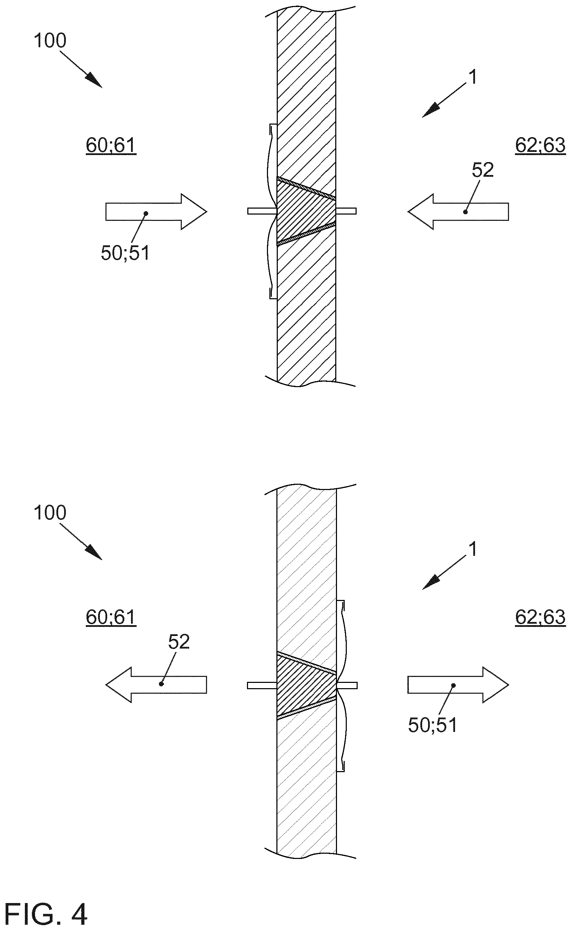

Fig. 4 zeigt bevorzugte Weiterentwicklungen der in Fig. 2 und 3 gezeigten Ausgestaltungsformen von erfindungsgemäßen Systemen 100 mit erfindungsgemäßen Durchführungselementen 1. Insbesondere ist in beiden Fällen vorgesehen, dass durch die Trennschicht 70 ein erstes Fluid 60 mit einem ersten Fluiddruck 61 und ein zweites Fluid 62 mit einem zweiten Fluiddruck 63 voneinander getrennt werden. Die beiden Fluiddrücke 61, 63 unterscheiden sich, sodass dadurch eine Öffnungskraft 52 erzeugt wird. Eine Richtung dieser Öffnungskraft 52 ist insbesondere der Fixierrichtung 51 der Fixierkraft 50 entgegengesetzt. Übersteigt nun die Größe der Öffnungskraft 52 einen insbesondere einstellbaren Öffnungsgrenzwert der Fixierkraft 50, wird das erfindungsgemäße Durchführungselement 1 aus der Durchführungsaufnahme 73 herausgedrückt, wodurch ein Strömen in dieser Ausgestaltungsform des zweiten Fluids 62 in Richtung des ersten Fluids 60 erfolgen kann. Eine Verwendung eines erfindungsgemäßen Durchführungselements 1 bzw. eines erfindungsgemäßen Systems 100 als Überdruckventil kann auf diese Weise ermöglicht werden.

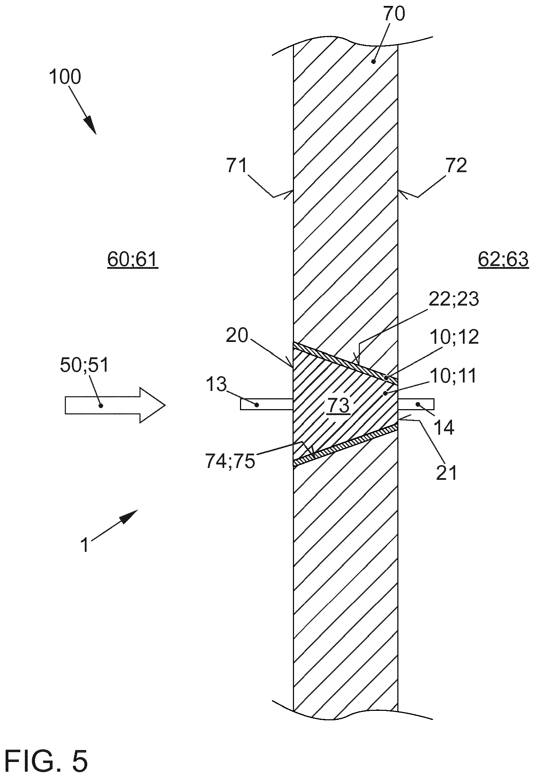

In Fig. 5 ist eine weitere alternative oder zusätzliche Ausgestaltungsform eines Systems 100 mit einem Durchführungselement 1 gezeigt. Die Ausführungsform der Fig. 5 bis Fig. 7 fällt nicht unter den Wortlaut der Ansprüche, wird aber als zum Verständnis der Erfindung erleichternd angesehen. Auch in dieser Ausgestaltungsform wird durch die Trennschicht 70 ein erstes Fluid 60 von einem zweiten Fluid 62 getrennt, wobei die beiden Fluide 60, 62 unterschiedliche Fluiddrücke 61, 63 aufweisen. In diesem Fall jedoch unterscheiden sich die Fluiddrücke 61, 63 derart, dass dadurch eine Fixierkraft 50 erzeugt wird, die in einer Fixierrichtung 51, gerichtet von der ersten Stirnfläche 20 des Elementkörpers 10 zur zweiten Stirnfläche 21 des Elementkörpers 10, wirkt, wodurch der Elementkörper 10, insbesondere der Leitabschnitt 11 und der Isolationsabschnitt 12, des Durchführungselements 1 in die Durchführungsaufnahme 73 gedrückt wird. Ein sicheres insbesondere formschlüssiges Anordnen und Halten des Durchführungselements 1 in der Durchführungsaufnahme 73 kann somit in dieser Ausgestaltungsform bereits durch die unterschiedlichen Fluiddrücke 61, 63 der beiden Fluide 60, 62 auf den beiden Seiten der Trennschicht 70 bereitgestellt werden.

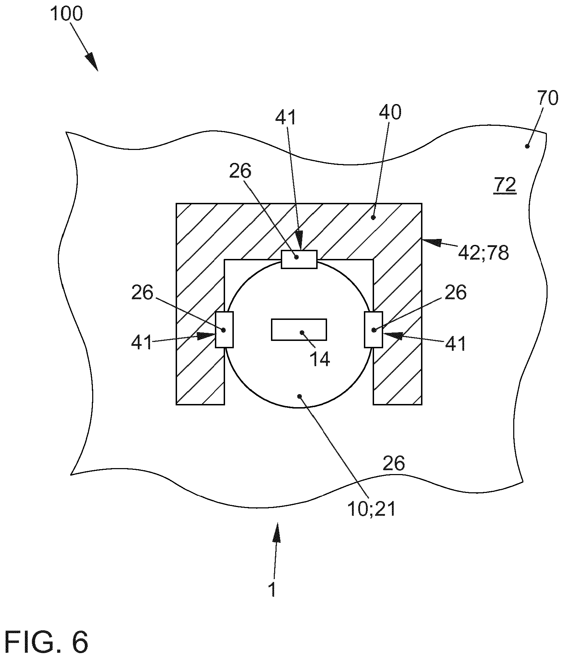

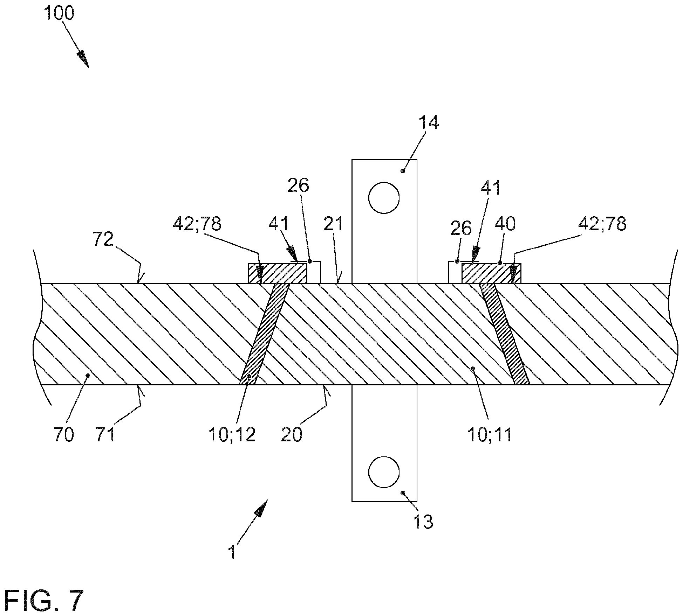

Die Fig. 6 und 7 zeigen verschiedene Ansichten einer weiteren zusätzlichen und alternativen Ausgestaltungsform eines Systems 100 mit einem Durchführungselement 1, wobei Fig. 6 eine Draufsicht und Fig. 7 eine Schnittansicht zeigt. Im Folgenden werden daher die beiden Fig. 6 und 7 gemeinsam beschrieben. In der dargestellten Ausgestaltungsform ist insbesondere ein Halteelement 40 vorgesehen, das durch eine formschlüssige Anordnung sowohl am Elementkörper 10 des Durchführungselement 1 als auch ein einer zweiten Oberfläche 72 der Trennschicht 70 ein sicheres Halten des Durchführungselements 1 in der Durchführungsaufnahme 73 bereitstellt. Dafür weist das Halteelement 40 insbesondere Elementhalteabschnitte 41 auf, die mit Elementgegenhalteabschnitten 26 des Elementkörpers 10 in Formschluss treten können. Ferner weist das Halteelement 40 einen Trennschichthalteabschnitt 42 auf, der wiederum mit einem Trennschichtgegenhalteabschnitt 78 in Formschluss gebracht werden kann. Der Trennschichthalteabschnitt 42 und der Trennschichtgegenhalteabschnitt 78 sind in dieser Ausgestaltungsform als durchgängige Flächen des Halteelements 40 bzw. der zweiten Oberfläche 72 der Trennschicht 70 ausgebildet, die aneinander angeordnet sind beziehungsweise werden können. Eine Montage des Durchführungselements 1 in der Durchführungsaufnahme 73 gestaltet sich bei Verwendung dieses Halteelements 40 wie folgt, dass das Durchführungselement 1 in die Durchführungsaufnahme 73 eingesetzt bzw. durchgeschoben wird, wobei anschließend das Halteelement 40 formschlüssig am Elementgegenhalteabschnitt 26 angeordnet, insbesondere eingeschoben, wird. Ein Entfernen des Elementkörpers 10 bzw. des gesamten Durchführungselements 1 aus der Durchführungsaufnahme 73 kann auf diese Weise verhindert werden.

### Bezugszeichenliste

- 1: Durchführungselement

- 10: Elementkörper
- 11: Leitabschnitt
- 12: Isolationsabschnitt
- 13: erster Anschlussabschnitt
- 14: zweiter Anschlussabschnitt

- 20: erste Stirnfläche
- 21: zweite Stirnfläche
- 22: Mantelfläche
- 23: Dichtfläche
- 24: erster Gegeneinleiteabschnitt
- 25: zweiter Gegeneinleiteabschnitt
- 26: Elementgegenhalteabschnitt

- 30: Fixiervorrichtung
- 31: erstes Federelement
- 32: erster Abstützabschnitt
- 33: erster Einleiteabschnitt
- 34: zweites Federelement
- 35: zweiter Abstützabschnitt
- 36: zweiter Einleiteabschnitt

- 40: Halteelement
- 41: Elementhalteabschnitt
- 42: Trennschichthalteabschnitt

- 50: Fixierkraft
- 51: Fixierrichtung
- 52: Öffnungskraft

- 60: erstes Fluid
- 61: erster Fluiddruck
- 62: zweites Fluid
- 63: zweiter Fluiddruck

- 70: Trennschicht
- 71: erste Oberfläche
- 72: zweite Oberfläche
- 73: Durchführungsaufnahme
- 74: Innenfläche
- 75: Gegendichtfläche
- 76: erster Gegenabstützungsabschnitt
- 77: zweiter Gegenabstützungsabschnitt
- 78: Trennschichtgegenhalteabschnitt

- 100: System

## Patentansprüche

1. Durchführungselement (1) zum Bereitstellen einer elektrisch leitenden Verbindung durch eine Trennschicht (70), wobei die Trennschicht ein Gehäuse einer Batterie eines Fahrzeuges ist, aufweisend einen Elementkörper (10) zum formschlüssigen oder zumindest im Wesentlichen formschlüssigen Einsetzen in eine Durchführungsaufnahme (73) der Trennschicht (70), der Elementkörper (10) aufweisend einen durchgängig elektrisch leitenden Leitabschnitt (11) zum Bereitstellen der elektrisch leitenden Verbindung und einen zumindest abschnittsweise den Leitabschnitt (11) umfänglich umgebenden elektrisch isolierenden Isolationsabschnitt (12) zum Isolieren des Leitabschnitts (11) gegen eine Innenfläche (74) der Durchführungsaufnahme (73), wobei der Elementkörper (10) eine erste Stirnfläche (20), eine der ersten Stirnfläche (20) gegenüberliegende zweite Stirnfläche (21) und eine die erste Stirnfläche (20) und die zweite Stirnfläche (21) verbindende Mantelfläche (22) aufweist, wobei die erste Stirnfläche (20) eine größere Querschnittsfläche als die zweite Stirnfläche (21) aufweist und wobei die Mantelfläche (22) umlaufend zumindest abschnittsweise durch den Isolationsabschnitt (12) gebildet ist, wobei das Durchführungselement (1) zum Fixieren des Elementkörpers (10) in der Durchführungsaufnahme (73) eine Fixiervorrichtung (30) zum Ausüben einer Fixierkraft (50) mit einer Fixierrichtung (51) auf den Elementkörper (10) aufweist, wobei die Fixierrichtung (51) der Fixierkraft (50) zumindest im Wesentlichen von der ersten Stirnfläche (20) zur zweiten Stirnfläche (21) zeigt, wobei die Fixiervorrichtung (30) ein erstes Federelement (31) zum Ausüben einer drückenden Fixierkraft (50) auf die erste Stirnfläche (20) aufweist, **dadurch gekennzeichnet, dass** das erste Federelement (31) zumindest einen ersten Abstützabschnitt (32) zum Abstützen an einem ersten Gegenabstützungsabschnitt (76) auf einer ersten Oberfläche (71) der Trennschicht (70) und einen ersten Einleiteabschnitt (33) zum Einleiten der Fixierkraft (50) in einen ersten Gegeneinleiteabschnitt (24) an der ersten Stirnfläche (20) aufweist.

2. Durchführungselement (1) nach Anspruch 1,
**dadurch gekennzeichnet,**
**dass** der Elementkörper (10), insbesondere der Leitabschnitt (11), kegelstumpfförmig oder zumindest im Wesentlichen kegelstumpfförmig ausgebildet ist.

3. Durchführungselement (1) nach einem der vorangegangenen Ansprüche,
**dadurch gekennzeichnet,**
**dass** der Isolationsabschnitt (12) zum Bereitstellen einer fluiddichten Abdichtung der Durchführungsaufnahme (73) zumindest eine Dichtfläche (23) zum formschlüssigen Anlegen an zumindest eine Gegendichtfläche (75) der Innenfläche (74) der Durchführungsaufnahme (73) aufweist.

4. Durchführungselement (1) nach einem der vorangegangenen Ansprüche,
**dadurch gekennzeichnet,**
**dass** die Fixiervorrichtung (30) ein zweites Federelement (34) zum Ausüben einer ziehenden Fixierkraft (50) auf die zweite Stirnfläche (21) aufweist, wobei das zweite Federelement (34) zumindest einen zweiten Abstützabschnitt (35) zum Abstützen an einem zweiten Gegenabstützungsabschnitt (77) auf einer zweiten Oberfläche (72) der Trennschicht (70) und einen zweiten Einleiteabschnitt (36) zum Einleiten der Fixierkraft (50) in einen zweiten Gegeneinleiteabschnitt (25) an der zweiten Stirnfläche (21) aufweist.

5. Durchführungselement (1) nach einem der vorangegangenen Ansprüche,
**dadurch gekennzeichnet,**
**dass** die Fixierkraft (50) einen, insbesondere einstellbaren, Öffnungsgrenzwert aufweist zum Beenden des Fixierens des Elementkörpers (10) in der Durchführungsaufnahme (73) bei einer auf den Elementkörper (10) entgegen der Fixierrichtung (51) wirkenden Öffnungskraft (52) größer als der Öffnungsgrenzwert.

6. Durchführungselement (1) nach einem der vorangegangenen Ansprüche,
**dadurch gekennzeichnet,**
**dass** das Durchführungselement (1) zum formschlüssigen Halten des Elementkörpers (10) in der Durchführungsaufnahme (73) ein Halteelement (40) aufweist, wobei das Halteelement (40) zumindest einen Elementhalteabschnitt (41) zum formschlüssigen Kontaktieren eines Elementgegenhalteabschnitts (26) des Elementkörpers (10) und einen Trennschichthalteabschnitt (42) zum formschlüssigen Kontaktieren eines Trennschichtgegenhalteabschnitts (78) der Trennschicht (70) aufweist.

7. System (100) aus einer Trennschicht (70) und einem Durchführungselement (1) zum Bereitstellen einer elektrisch leitenden Verbindung durch die Trennschicht (70), die Trennschicht (70) aufweisend eine Durchführungsaufnahme (73), in der das Durchführungselement (1) formschlüssig oder zumindest im Wesentlichen formschlüssig eingesetzt ist,
**dadurch gekennzeichnet,**
**dass** das Durchführungselement (1) nach einem der vorangegangenen Ansprüche ausgebildet ist.

8. System (100) nach Anspruch 7,
**dadurch gekennzeichnet,**
**dass** die Trennschicht (70) ein erstes Fluid (60) mit einem ersten Fluiddruck (61) und ein zweites Fluid (62) mit einem zum ersten Fluiddruck (61) unterschiedlichen zweiten Fluiddruck (63) trennt, wobei der Unterschied des ersten Fluiddrucks (61) zum zweiten Fluiddruck (63) eine Fixierkraft (50) mit einer Fixierrichtung (51) auf das Durchführungselement (1) zum Fixieren des Durchführungselements (1) in der Durchführungsaufnahme (73) erzeugt, wobei die Fixierrichtung (51) der Fixierkraft (50) zumindest im Wesentlichen von der ersten Stirnfläche (20) des Durchführungselements (1) zu der zweiten Stirnfläche (21) des Durchführungselements (1) zeigt.

## Claims

1. Feed-through element (1) for providing an electrically conducting connection through a separating layer (70), wherein the separating layer is a housing of a battery of a vehicle, having an element body (10) for inserting in a form-fitting or at least substantially form-fitting manner into a feed-through receptacle (73) of the separating layer (70); the element body (10) having a conductor portion (11), which is continuously electrically conducting, for providing the electrically conducting connection, and an electrically isolating insulation portion (12), which circumferentially surrounds the conductor portion (11) at least in portions, for isolating the conductor portion (11) in relation to an internal face (74) of the feed-through receptacle (73); wherein the element body (10) has a first end face (20), a second end face (21) lying opposite the first end face (20), and a shell face (22) connecting the first end face (20) and the second end face (21), wherein the first end face (20) has a larger cross-sectional area than the second end face (21), and wherein the shell face (22) is formed in an encircling manner at least in portions by the insulation portion (12); wherein the feed-through element (1) has a fixing device (30) which for fixing the element body (10) in the feed-through receptacle (73) exerts a fixing force (50) with a fixing direction (51) on the element body (10), wherein the fixing direction (51) of the fixing force (50) points at least substantially from the first end face (20) towards the second end face (21), wherein the fixing device (30) has a first spring element (31) for exerting a fixing force (50) pressing onto the first end face (20), **characterized in that** the first spring element (31) has at least one first support portion (32) so as to be supported on a first mating support portion (76) on a first surface (71) of the separating layer (70), and a first introduction portion (33) for introducing the fixing force (50) into a first mating introduction portion (24) on the first end face (20).

2. Feed-through element (1) according to Claim 1,
**characterized in that**
the element body (10), in particular the conductor portion (11), is configured to be frustoconical or at least substantially frustoconical.

3. Feed-through element (1) according to one of the preceding claims,
**characterized in that**
the insulation portion (12), for providing fluid-tight sealing of the feed-through receptacle (73), has at least one sealing face (23) for resting in a form-fitting manner on at least one mating sealing face (75) of the internal face (74) of the feed-through receptacle (73).

4. Feed-through element (1) according to one of the preceding claims,
**characterized in that**
the fixing device (30) has a second spring element (34) for exerting a pulling fixing force (50) on the second end face (21), wherein the second spring element (34) has at least one second support portion (35) so as to be supported on a second mating support portion (77) on a second surface (72) of the separating layer (70), and a second introduction portion (36) for introducing the fixing force (50) into a second mating introduction portion (25) on the second end face (21).

5. Feed-through element (1) according to one of the preceding claims,
**characterized in that**
the fixing force (50) has an in particular adjustable opening limit value for terminating the fixing of the element body (10) in the feed-through receptacle (73) when an opening force (52) acting on the element body (10) counter to the fixing direction (51) is greater than the opening limit value.

6. Feed-through element (1) according to one of the preceding claims,
**characterized in that**
the feed-through element (1), for holding the element body (10) in a form-fitting manner in the feed-through receptacle (73), has a holding element (40), wherein the holding element (40) has at least one element holding portion (41) for contacting an element counter-holding portion (26) of the element body (10) in a form-fitting manner, and a separating layer holding portion (42) for contacting a separating layer counter-holding portion (78) of the separating layer (70) in a form-fitting manner.

7. System (100) of a separating layer (70) and a feed-through element (1) for providing an electrically conducting connection through the separating layer (70), the separating layer (70) having a feed-through receptacle (73) into which the feed-through element (1) is inserted in a form-fitting or at least substantially form-fitting manner,
**characterized in that**
the feed-through element (1) is configured according to one of the preceding claims.

8. System (100) according to Claim 7,
**characterized in that**
the separating layer (70) separates a first fluid (60) having a first fluid pressure (61), and a second fluid (62) having a second fluid pressure (63) different from the first fluid pressure (61), wherein the difference between the first fluid pressure (61) and the second fluid pressure (63) generates a fixing force (50) with a fixing direction (51) on the feed-through element (1) so as to fix the feed-through element (1) in the feed-through receptacle (73), wherein the fixing direction (51) of the fixing force (50) points at least substantially from the first end face (20) of the feed-through element (1) towards the second end face (21) of the feed-through element (1).

## Revendications

1. Élément de traversée (1) destiné à établir une liaison électriquement conductrice à travers une couche de séparation (70), la couche de séparation étant un boîtier d'une batterie d'un véhicule, ledit élément de traversée comportant un corps d'élément (10) destiné à être inséré par complémentarité de formes ou au moins sensiblement par complémentarité de formes dans un logement de traversée (73) de la couche de séparation (70), le corps d'élément (10) comportant une portion de conduction (11) électriquement conductrice de bout en bout et destinée à établir la liaison électriquement conductrice et une portion d'isolation (12) électriquement isolante entourant périphériquement au moins par portions la portion de conduction (11) et destinée à isoler la portion de conduction (11) par rapport à une surface intérieure (74) du logement de traversée (73), le corps d'élément (10) comportant une première surface frontale (20), une deuxième surface frontale (21) opposée à la première surface frontale (20) et une surface latérale (22) reliant la première surface frontale (20) et la deuxième surface frontale (21), la première surface frontale (20) ayant une aire en coupe transversale supérieure à celle de la deuxième surface frontale (21) et la surface latérale (22) étant formée circonférentiellement au moins par portions par la portion d'isolation (12), l'élément de traversée (1) comportant, afin de fixer le corps d'élément (10) dans le logement de traversée (73), un dispositif de fixation (30) destiné à exercer une force de fixation (50) avec un sens de fixation (51) sur le corps d'élément (10), le sens de fixation (51) de la force de fixation (50) étant dirigé au moins sensiblement de la première surface frontale (20) vers la deuxième surface frontale (21), le dispositif de fixation (30) comportant un premier élément à ressort (31) destiné à exercer une force de fixation par pression (50) sur la première surface frontale (20), **caractérisé en ce que** le premier élément de ressort (31) comporte au moins une première portion d'appui (32) destinée à venir en appui sur une première portion d'appui antagoniste (76) sur une première surface (71) de la couche de séparation (70) et une première portion d'introduction (33) destinée à introduire la force de fixation (50) dans une première portion d'introduction antagoniste (24) sur la première surface frontale (20).

2. Élément de traversée (1) selon la revendication 1, **caractérisé en ce que**
le corps d'élément (10), en particulier la portion de conduction (11), est tronconique ou au moins sensiblement tronconique.

3. Élément de traversée (1) selon l'une des revendications précédentes,
**caractérisé en ce que**
la portion d'isolation (12) comporte au moins une surface d'étanchéité (23) destinée à venir en appui par complémentarité de formes sur au moins une surface d'étanchéité antagoniste (75) de la surface intérieure (74) du logement de traversée (73) afin que le logement de traversée (73) soit étanche aux fluides.

4. Élément de traversée (1) selon l'une des revendications précédentes,
**caractérisé en ce que**
le dispositif de fixation (30) comporte un deuxième élément à ressort (34) destiné à exercer une force de fixation par traction (50) sur la deuxième surface frontale (21), le deuxième élément à ressort (34) comportant au moins une deuxième portion d'appui (35) destinée à venir en appui sur une deuxième portion d'appui antagoniste (77) sur une deuxième surface (72) de la couche de séparation (70) et une deuxième portion d'introduction (36) destinée à introduire la force de fixation (50) dans une deuxième portion d'introduction antagoniste (25) sur la deuxième surface frontale (21).

5. Élément de traversée (1) selon l'une des revendications précédentes,
**caractérisé en ce que**
la force de fixation (50) présente une valeur limite d'ouverture, en particulier réglable, destinée à mettre fin à la fixation du corps d'élément (10) dans le logement de traversée (73) lorsque la force d'ouverture (52) qui agit sur le corps d'élément (10) dans le sens opposé au sens de fixation (51) est supérieure à la valeur limite d'ouverture.

6. Élément de traversée (1) selon l'une des revendications précédentes,
**caractérisé en ce que**
l'élément de traversée (1) comporte un élément de retenue (40) afin de retenir par complémentarité de formes le corps d'élément (10) dans le logement de traversée (73), l'élément de retenue (40) comportant au moins une portion de retenue d'élément (41) destinée à venir en contact par complémentarité de formes avec une portion de retenue d'élément antagoniste (26) du corps d'élément (10) et une portion de retenue de couche de séparation (42) destinée à venir en contact par complémentarité de formes avec une portion de retenue de couche de séparation antagoniste (78) de la couche de séparation (70).

7. Système (100) comprenant une couche de séparation (70) et un élément de traversée (1) et destiné à établir une liaison électriquement conductrice à travers la couche de séparation (70), la couche de séparation (70) comportant un logement de traversée (73) dans lequel l'élément de traversée (1) est inséré par complémentarité de formes ou au moins sensiblement par complémentarité de formes,
**caractérisé en ce que**
l'élément de traversée (1) est conçu selon l'une des revendications précédentes.

8. Système (100) selon la revendication 7,
**caractérisé en ce que**
la couche de séparation (70) sépare un premier fluide (60) à une première pression de fluide (61) et un deuxième fluide (62) à une deuxième pression de fluide (63) différente de la première pression de fluide (61), la différence entre la première pression de fluide (61) et la deuxième pression de fluide (63) générant une force de fixation (50) avec un sens de fixation (51) sur l'élément de traversée (1) afin de fixer l'élément de traversée (1) dans le logement de traversée (73), le sens de fixation (51) de la force de fixation (50) étant dirigé au moins sensiblement de la première surface frontale (20) de l'élément de traversée (1) vers la deuxième surface frontale (21) de l'élément de traversée (1).
